# EUROPÄISCHE PATENTSCHRIFT

(11) **EP 2 173 591 B1**
(45) Veröffentlichungstag und Bekanntmachung des Hinweises auf die Patenterteilung: **03.08.2011**
(21) Anmeldenummer: 08761200.8
(22) Anmeldetag: 19.06.2008
(51) Int. Cl.: B60T 10/02, F16D 57/04

(54) **HYDRODYNAMISCHER RETARDER MIT TANGENTIALEM ZU- UND ABSTRÖMPRINZIP**
HYDRODYNAMIC RETARDER WITH A TANGENTIAL INFLOW AND OUTFLOW PRINCIPLE
RETARDATEUR HYDRODYNAMIQUE AVEC PRINCIPE D'ENTRÉE ET DE SORTIE TANGENTIELLES

(30) Priorität: 06.07.2007 DE 102007031723
(43) Veröffentlichungstag der Anmeldung: 14.04.2010
(73) Patentinhaber: ZF Friedrichshafen AG, 88038 Friedrichshafen (DE)
(72) Erfinder: MEID, Thomas, 88693 Deggenhausertal (DE); HUBER, Michael, 88085 Langenargen (DE); ULMER, Andreas, 88074 Meckenbeuern (DE); KRAUSE, Stefan, 88046 Friedrichshafen (DE); WEISSENRIEDER, Peter, 88074 Meckenbeuren (DE)
(86) Internationale Anmeldenummer: PCT/EP2008/057756
(87) Internationale Veröffentlichungsnummer: WO 2009/007220

(56) Entgegenhaltungen:
- WO-A-02/04833
- DE-A1- 4 028 128

## Beschreibung

Die vorliegende Erfindung bezieht sich auf einen hydrodynamischen Retarder mit tangentialem Zu- und Abströmprinzip gemäß dem Oberbegriff des Patentanspruchs 1.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl beschleunigt und an den Stator übergibt. Hierdurch wird eine Bremswirkung auf die Rotorwelle erzeugt.

Bei hydrodynamischen Retardern mit tangentialem Zu- und Abströmprinzip wird das zuströmende Medium bei Teilfüllung, d.h. bei einer Füllung mit einer geringen Ölmenge durch den tangentialen Auslass unmittelbar wieder entleert, ohne den hydrodynamischen Kreislauf zu schließen. Um eine geringe Änderung des Bremsmoments zu erzielen, ist in einem derartigen Betriebsbereich eine große Änderung des dazugehörigen Steuerdrucks notwendig.

Nimmt der Grad der Füllung des Retarders weiter zu, so wird der hydrodynamische Kreislauf ab einem bestimmten Füllgrad geschlossen, wobei bei geschlossenem Kreislauf nur geringe Steuerdruckänderungen für große Bremsmomentänderungen erforderlich sind.

Somit entstehen bei hydrodynamischen Retardern mit tangentialem Zu- und Abströmprinzip zwei unterschiedliche Betriebsbereiche, wobei am Übergang zwischen beiden Bereichen eine Instabilität gegeben ist, was zu starken Schwankungen des Bremsmomentes führt, da in diesem Betriebspunkt ein ständiger Wechsel zwischen geschlossenem und offenem hydrodynamischen Kreislauf stattfindet:

Aus der DE 4028128 A1 der Anmelderin ist eine Vorrichtung zur Reduzierung von Leerlaufverlusten bei hydrodynamischen Bremsen bekannt, bei der zur Verringerung der Ventilationsverluste veränderliche Strömungshindernisse zwischen Rotor und Stator der Bremse angeordnet sind. Hierbei trennen ein oder mehrere im Querschnitt z. B. winkelförmige Strömungshindernisse im Leerlaufbetrieb bei ölentleerter Bremse im äußeren Bereich der Torusräume über einen nach radial innen ragenden ringförmigen Schenkel diese Räume, wobei ein in axialer Richtung zylinderförmig angeordneter Schenkel an der inneren Wand einer Kammer anliegt.

Im Bremsbetrieb steht bei der bekannten Bremse der radial nach innen ragende Schenkel mit seiner vorderen Kante hinter den Torusräumen zurück; wenn nur ein Strömungshindernis angeordnet ist, das den gesamten Umfang des äußeren Bereichs der Torusräume überdeckt, sind zur Erzielung der entsprechenden Elastizität Schlitze im radial nach innen ragenden ringförmigen Schenkel angeordnet. Die Betätigung in die radial äußere und innere Endstellung wird über eine Betätigungseinrichtung erzielt, wobei eine besonders vorteilhafte Ausgestaltung über eine Kolben-Zylinder-Einheit mit zwei Kolben und mit einer Mitnahmeeinrichtung an den Kolben und Mitnehmern an dem Strömungshindernis ist; hierbei wird die innere Stellung über Federn und die äußere Stellung über den Druck eines Druckmittels in einem Druckraum zwischen den beiden Kolben erzielt.

Der vorliegenden Erfindung liegt die Aufgabe zugrunde, einen hydrodynamischen Retarder mit tangentialem Zu- und Abströmprinzip anzugeben, bei dem die Instabilität zwischen den beiden Betriebebereichen weitgehend vermieden wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein hydrodynamischer Retarder mit tangentialem Zu- und Abströmprinzip vorgeschlagen, bei dem auch bei Teilfüllung in Teilbereichen ein geschlossener Kreislauf entsteht.

Dadurch wird ein tangentiales Abströmen des Mediums in diesen Teilbereichen eingeschränkt, ohne jedoch das Funktionsprinzip des tangentialen Abströmens zu gefährden. Dies resultiert wiederum in der Vermeidung der instabilen Betriebsbereiche.

Gemäß der Erfindung wird dies dadurch erreicht, dass am Stator des hydrodynamischen Retarders mindestens eine radiale Ausnehmung ausgebildet ist und sich entlang des Umfangs (radial betrachtet nach außen) ausdehnt, wobei die Tiefe und Breite bzw. Ausdehnung der radialen Ausnehmung variabel gestaltbar sein kann.

Durch die erfindungsgemäß ausgebildete Ausnehmungen wird bei Teilfüllung eine Rückspeisung bzw. Zurückbefüllung des durch den tangentialen Auslass des Retarders austretenden Öls in den Druckraum ermöglicht, wodurch der hydrodynamische Kreislauf geschlossen wird. Im stabilen Betriebsbereich des Retarders bei hohen Anforderungen haben die Ausnehmungen einen vernachlässigbaren Einfluss.

Die Erfindung wird im folgenden anhand der beigefügten Figuren beispielhaft näher erläutert.

Es zeigen:
- Figur 1:: Eine Teilansicht der Druckseite der Schaufel des Stators zur Veranschaulichung der Erfindung;
- Figur 2:: Eine schematische Draufsicht des Schaufelrades des Stators gemäß einer bevorzugten Ausführungs- form der Erfindung;
- Figur 3:: Eine schematische Seitenansicht des in Figur 2 ge- zeigten Schaufelrades; und
- Figur 4:: Eine Ansicht eines Teils des Schaufelrades des Sta- tors vom Zentrum des Druckraumes des Retarders aus.

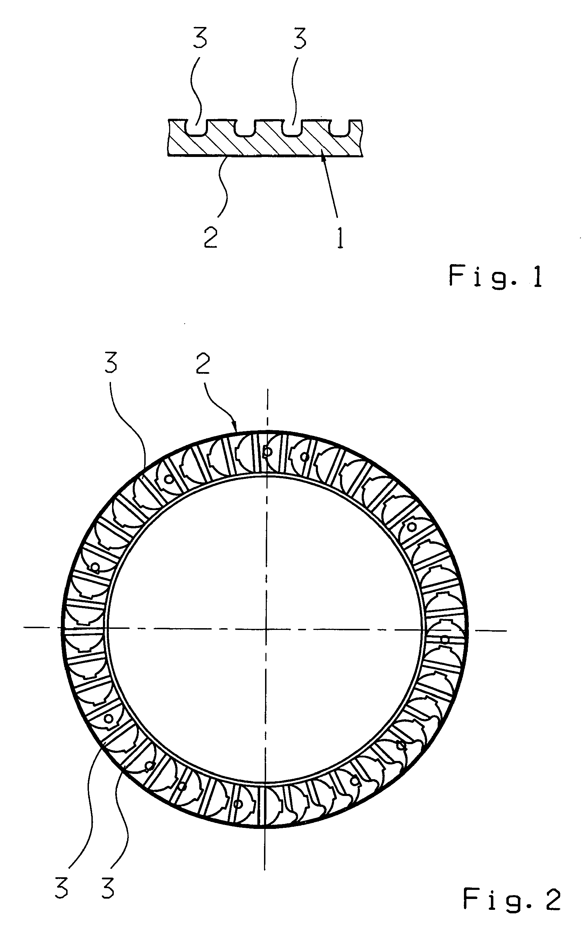

In Figur 1 ist ein Teil der Druckseite 1 des Schaufelrades 2 des Stators eines hydrodynamischen Retarders gezeigt, wobei gemäß der Erfindung radiale Ausnehmungen 3 vorgesehen sind und sich radial nach außen erstrecken. Dadurch wird bei Teilfüllung eine Rückspeisung bzw. Zurückbefüllung des durch den tangentialen Auslass austretenden Öls in den Druckraum ermöglicht. Der Grad der Rückspeisung kann durch die Anzahl und Dimensionierung der Ausnehmungen bestimmt bzw. eingestellt werden.

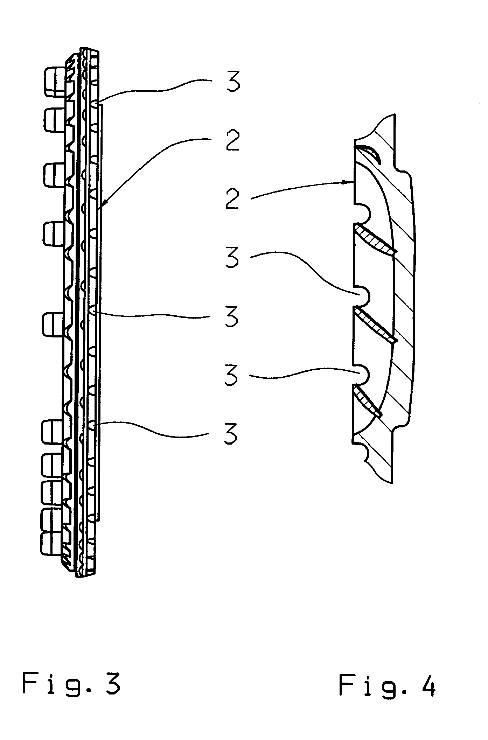

Figur 2 zeigt eine schematische Draufsicht eines gemäß der Erfindung ausgebildeten Schaufelrades 2 eines Stators, bei dem mehrere gleich dimensionierte Ausnehmungen 3 um den Umfang symmetrisch verteilt sind. Die entsprechende Seitenansicht des Schaufelrades 2 ist Gegenstand der Figur 3.

Figur 4 ist eine Ansicht der erfindungsgemäßen Ausgestaltung des Schaufelrades 2 vom Zentrum des Druckraumes des Retarders aus. Bei den gezeigten Figuren sind die Ausnehmungen 3 symmetrisch um den Umfang des Schaufelrades 2 angeordnet und weisen die gleichen Dimensionen auf. Es ist jedoch möglich, die Ausnehmungen 3 asymmetrisch zu verteilen bzw. anzuordnen. Des weiteren kann die Dimensionierung einzelner Ausnehmungen 3 unterschiedlich sein. Zudem kann der Durchmesser der Ausnehmungen 3 über die Länge variieren.

### Bezugszeichen

- 1: Druckseite
- 2: Schaufelrad
- 3: Ausnehmung

## Patentansprüche

1. Hydrodynamischer Retarder mit tangentialem Zu- und Abströmprinzip, **dadurch gekennzeichnet, dass** am Stator des hydrodynamischen Retarders mindestens eine radiale Ausnehmung (3) ausgebildet ist, welche sich radial betrachtet nach außen ausdehnt, derart, dass bei Teilfüllung eine Rückspeisung bzw. Zurückbefüllung des durch den tangentialen Auslass des Retarders austretenden Öls in den Druckraum ermöglicht wird.

2. Hydrodynamischer Retarder mit tangentialem Zu- und Abströmprinzip, nach Anspruch 1, **dadurch gekennzeichnet, dass** der Grad der Rückspeisung durch die Anzahl und Dimensionierung der Ausnehmungen (3) bestimmbar bzw. einstellbar ist.

3. Hydrodynamischer Retarder mit tangentialem Zu- und Abströmprinzip, nach Anspruch 1 oder 2, **dadurch gekennzeichnet, dass** die Ausnehmungen (3) symmetrisch oder asymmetrisch um den Umfang des Schaufelrades angeordnet (2) sind.

4. Hydrodynamischer Retarder mit tangentialem Zu- und Abströmprinzip, nach Anspruch 1, 2 oder 3, **dadurch gekennzeichnet, dass** die Ausnehmungen (3) die gleichen Dimensionen aufweisen.

5. Hydrodynamischer Retarder mit tangentialem Zu- und Abströmprinzip, nach Anspruch 1, 2 oder 3, **dadurch gekennzeichnet, dass** die Ausnehmungen (3) unterschiedlich dimensioniert sind.

6. Hydrodynamischer Retarder mit tangentialem Zu- und Abströmprinzip, nach Anspruch 1, 2, 3, 4 oder 5, **dadurch gekennzeichnet, dass** der Durchmesser der Ausnehmungen (3) über die Länge variabel ist.

## Claims

1. Hydrodynamic retarder having a tangential inflow and outflow principle, **characterized in that** the stator of the hydrodynamic retarder has formed on it at least one radial recess (3) which, as seen radially, extends outwards in such a way that, in the event of partial filling, a feedback or backfilling of the oil emerging through the tangential outlet of the retarder into the pressure space becomes possible.

2. Hydrodynamic retarder having a tangential inflow and outflow principle, according to Claim 1, **characterized in that** the degree of feedback can be determined or can be set by means of the number and dimensioning of the recesses (3).

3. Hydrodynamic retarder having a tangential inflow and outflow principle, according to Claim 1 or 2, **characterized in that** the recesses (3) are arranged (2) symmetrically or asymmetrically around the circumference of the blade wheel.

4. Hydrodynamic retarder having a tangential inflow and outflow principle, according to Claim 1, 2 or 3, **characterized in that** the recesses (3) have the same dimensions.

5. Hydrodynamic retarder having a tangential inflow and outflow principle, according to Claim 1, 2 or 3, **characterized in that** the recesses (3) are dimensioned differently.

6. Hydrodynamic retarder having a tangential inflow and outflow principle, according to Claim 1, 2, 3, 4 or 5, **characterized in that** the diameter of the recesses (3) is variable over the length.

## Revendications

1. Retardateur hydrodynamique avec principe d'entrée et de sortie tangentielles, **caractérisé en ce qu'**au moins un évidement radial (3) est réalisé sur le stator du retardateur hydrodynamique, lequel s'étire vers l'extérieur, considéré dans la direction radiale, de telle sorte que lors d'un remplissage partiel, une réinjection ou un nouveau remplissage dans l'espace de pression de l'huile sortant à travers la sortie tangentielle du retardateur soit possible.

2. Retardateur hydrodynamique avec principe d'entrée et de sortie tangentielles selon la revendication 1, **caractérisé en ce que** le degré de réinjection peut être déterminé ou ajusté par le nombre et le dimensionnement des évidements (3).

3. Retardateur hydrodynamique avec principe d'entrée et de sortie tangentielles selon la revendication 1 ou 2, **caractérisé en ce que** les évidements (3) sont disposés symétriquement ou asymétriquement autour de la périphérie de la roue à aubes (2).

4. Retardateur hydrodynamique avec principe d'entrée et de sortie tangentielles selon la revendication 1, 2 ou 3, **caractérisé en ce que** les évidements (3) ont les mêmes dimensions.

5. Retardateur hydrodynamique avec principe d'entrée et de sortie tangentielles selon la revendication 1, 2 ou 3, **caractérisé en ce que** les évidements (3) ont des dimensions différentes.

6. Retardateur hydrodynamique avec principe d'entrée et de sortie tangentielles selon la revendication 1, 2, 3, 4 ou 5, **caractérisé en ce que** le diamètre des évidements (3) est variable sur la longueur.
